Europäisches Patentamt

(19) European Patent Office

Office européen des brevets

(11) Veröffentlichungsnummer: **0 028 290**
**B1**

(12) **EUROPÄISCHE PATENTSCHRIFT**

(45) Veröffentlichungstag der Patentschrift:
**27.04.83**

(51) Int. Cl.³: **C 09 D 5/08, C 23 F 11/18**

(21) Anmeldenummer: **80104385.2**

(22) Anmeldetag: **25.07.80**

(54) Korrosionsinhibierendes Pigment und dieses enthaltende Anstrichfarbe oder Lack.

(30) Priorität: **08.10.79 DE 2940695**

(43) Veröffentlichungstag der Anmeldung:
**13.05.81 Patentblatt 81/19**

(45) Bekanntmachung des Hinweises auf die Patenterteilung:
**27.04.83 Patentblatt 83/17**

(84) Benannte Vertragsstaaten:
**AT BE CH DE FR GB IT LI NL SE**

(56) Entgegenhaltungen:
**GB-A-1 005 691**
**GB-A-1 536 660**
**US-A-4 156 613**

(73) Patentinhaber: **HOECHST AKTIENGESELLSCHAFT,
Postfach 80 03 20, D-6230 Frankfurt/Main 80 (DE)**

(72) Erfinder: **Hestermann, Klaus, Dr., Am Wachberg 68,
D-5042 Erftstadt (DE)**
Erfinder: **Maurer, Alexander, Dr., Am Grünen Weg 7,
D-5030 Hürth-Knapsack (DE)**
Erfinder: **Kandler, Joachim, Dr., Amselweg 10,
D-5042 Erftstadt (DE)**
Erfinder: **Mietens, Gerhard, Dr., Am Grünen Weg 16,
D-5030 Hürth-Knapsack (DE)**
Erfinder: **Beumling, Herbert, Dr., Dolman Strasse 122,
D-5060 Bergisch-Gladbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Korrosionsinhibierendes Pigment und dieses enthaltende Anstrichfarbe oder Lack

Die Erfindung betrifft ein korrosionsinhibierendes Aktivpigment für den Oberflächenschutz von Eisen und Eisenlegierungen.

Es ist bekannt, Anstrichmittel oder Spachtelmassen auf Bindemittelbasis, die Metallphosphate als schützendes Pigment enthalten, für den Aufbau von Schutzschichten auf Oberflächen aus Eisen oder Eisenlegierungen gegen die atmosphärische Korrosion zu verwenden. So wird in der GB-A-915 512 ein Pigment auf der Basis von Calciumphosphat und Zinkphosphat und in der GB-A-990 167 ein Gemisch aus Calciumphosphat und Zinkoxid beschrieben. In der DE-A-2 458 706 werden als korrosionsinhibierende Pigmente Magnesiumphosphate, insbesondere Trimagnesiumorthophosphat, beschrieben. Gemäss der DD-A-114 423 wird als korrosionsinhibierendes Pigment ein saures Magnesiumphosphat vorgeschlagen, dem gegebenenfalls Aluminiumpaste zugesetzt werden kann.

Die nicht-toxischen korrosionsinhibierenden Pigmente auf Phosphatbasis ergeben nicht den guten Korrosionsschutz wie die toxischen Pigmente von Bleimennige oder Metallchromaten, insbesondere von Zinkchromaten. Diese toxischen Pigmente weisen jedoch den Nachteil auf, dass es bei oberflächenbehandeltem Eisen oder Eisenlegierungen in Schweissnähten zu einer unerwünschten Porenbildung kommt und ausserdem sowohl die Blei- als auch die Chromatverbindungen bei Schleif- und Schweissvorgängen in Stäube überführt werden, weshalb aus arbeitsmedizinischen Gründen Absaugvorrichtungen nötig sind.

Ausserdem erfordern die modernen Punktschweissverfahren einen kleinen elektrischen Widerstand, der bei wasserfreien Pigmenten nicht immer gegeben ist.

Eine gute Annäherung an den guten Korrosionsschutz der toxischen Pigmente Bleimennige und Zinkchromat ergeben nun Gemische aus Calciumhydrogenphosphatdihydrat und Magnesiumhydrogenphosphattrihydrat, die in den älteren, nicht vorveröffentlichten DE-Patentanmeldungen P 28 49 712.3 und P 29 16 029.0 beschrieben sind.

Dennoch erschien es wünschenswert, den Korrosionsschutz dieser Phosphatpigmente weiter zu verbessern.

Es war daher die Aufgabe gestellt, ein ungiftiges, hochwirksames, korrosionsinhibierendes Pigment zu finden, welches in einem einfachen Arbeitsgang als Schutzschicht auf die Oberfläche von Eisen und Eisenlegierungen aufgebracht werden kann und z.B. bei nachträglichen Schleifarbeiten nicht durch die Entwicklung gesundheitsgefährdender Stäube stört.

Es wurde nun überraschenderweise gefunden, dass die schon gute korrosionsinhibierende Wirkung der in den älteren, nicht vorveröffentlichten DE-Patentanmeldungen P 28 49 712.3 und P 29 16 029.0 beschriebenen Phosphatgemische aus 3 bis 97 Gew.-% $MgHPO_4 \cdot 3H_2O$ und 97 bis 3 Gew.-% $CaHPO_4 \cdot 2H_2O$ weiter gesteigert werden kann, wenn den Phosphaten Zinkoxid (ZnO) zugesetzt wird. Es ergibt sich somit ein korrosionsinhibierendes Pigment aus $MgHPO_4 \cdot 3H_2O$, $CaHPO_4 \cdot 2H_2O$ und ZnO, das bessere Korrosionsschutzeigenschaften besitzt als Produkte, die nur aus $MgHPO_4 \cdot 3H_2O$ und $CaHPO_4 \cdot 2H_2O$ oder nur aus ZnO bestehen.

Der unerwartete synergistische Effekt des Dreikomponentensystems aus $MgHPO_4 \cdot 3H_2O$, $CaHPO_4 \cdot 2H_2O$ und ZnO erstreckt sich über einen weiten Mischungsbereich.

Im einzelnen betrifft die Erfindung nunmehr ein korrosionsinhibierendes Aktivpigment für den Oberflächenschutz von Eisen und Eisenlegierungen, welches dadurch gekennzeichnet ist, dass es aus einer Mischung von Calciumhydrogenphosphatdihydrat, Magnesiumhydrogenphosphattrihydrat und Zinkoxid besteht, wobei die Mischung 2 bis 98 Gew.-% ZnO enthält, während sich die restlichen 98 bis 2 Gew.% Phosphatanteil ihrerseits aus 3 bis 97 Gew.-% $CaHPO_4 \cdot 2H_2O$ und 97 bis 3 Gew.-% $MgHPO_4 \cdot 3H_2O$ zusammensetzen.

Das korrosionsinhibierende Aktivpigment der Erfindung ist bevorzugt dadurch gekennzeichnet, dass die Mischung 10 bis 50 Gew.-% ZnO enthält, während sich die restlichen 90 bis 50 Gew.-% Phosphatanteil ihrerseits aus 65 bis 95 Gew.-% $CaHPO_4 \cdot 2H_2O$ und 35 bis 5 Gew.-% $MgHPO_4 \cdot 3H_2O$ zusammensetzen.

Die Erfindung betrifft weiterhin eine Anstrichfarbe oder einen Lack für den Oberflächenschutz von Eisen und Eisenlegierungen, welche das neue korrosionsinhibierende Aktivpigment enthalten. Die Anstrichfarbe oder der Lack enthalten bevorzugt einen Gesamtpigmentanteil, der zu 5 bis 100 Gew.-% aus dem Aktivpigment und zu 95 bis 0 Gew.-% aus einem handelsüblichen Pigmentstreckungsmittel besteht. Weiterhin kann das Gesamtpigment in der Anstrichfarbe oder im Lack gemäss der Erfindung in einer Pigmentvolumenkonzentration von 10 bis 60, vorzugsweise von 20 bis 40, Vol-% enthalten sein. Die Pigmentvolumenkonzentration ist dabei definiert als das Verhältnis des Pigment- und Füllstoffvolumens zum Gesamtvolumen aller nicht-flüchtigen Farb- oder Lackbestandteile.

Die erfindungsgemässen korrosionsinhibierenden Aktivpigmente können in Anstrichfarben wie lufttrocknenden Farben und in Einbrennlacken für den Oberflächenschutz von Eisen und Eisenlegierungen eingesetzt werden, wobei den Anstrichfarben oder Lacken übliche Bindemittel, Lösemittel, Pigmentstreckungsmittel (Füllstoffe) und Anstrichveredelungsmittel zugesetzt werden können. Bindemittel sind z.B. trocknende Öle und selbsthärtende Harze. Als handelsübliche Pigmentstreckungsmittel, auch Füllstoffe genannt, können z.B. Baryte, Talkum, Titandioxid, Erdalkalicarbonate oder Wollastonit eingesetzt werden. Gebräuchliche Anstrichveredelungsmittel können ohne wesentlichen Einfluss auf die korrosionsinhibierenden Eigenschaften mit den erfindungsgemässen Aktivpigmenten verarbeitet werden. Derartige Anstrichveredelungsmittel sind beispielsweise Asbestinen oder Porzellanerde zur Verhütung des Absetzens der Feststoffe, Antimonoxid zur Verhütung des Auskreidens, Äthylmethylketoxim gegen Hautbildungsvorgänge und Diatomeenerde zur Förderung des Ausbreitens der Anstrichfarben.

Die erfindungsgemässen korrosionsinhibierenden Aktivpigmente besitzen keine die spätere Farbgebung beeinflussende Eigenfarbe.

Die erfindungsgemässen Aktivpigmente und die Vergleichspigmente wurden in Kurzzeittests geprüft nach dem Salzsprühtest (ASTM B 117-64), dem Schwitzwassertest (DIN 500 17) und dem Kesternichtest (DIN 500 18). Zur Testauswertung werden die Prüfbleche nach ihrem Rostgrad (Europäische Skala des Verrostungsgrades von Korrosionsschutzanstrichen — zu beziehen von «Fédération Nationale des Industries des Peintures, Vernis, Encres d'Imprimerie et Couleurs Fines, 42, Av. Marceau - 75008 Paris» —), ihrem Blasengrad (DIN 53209) und der Unterrostung am Kreuzschnitt bewertet. Den genormten Rostgrad- und Blasengradgrössen sowie der nach eigener Übereinkuft in Millimetern ausgemessenen Unterrostung werden jeweils Bewertungsziffern (BZ) von 0 bis 100 derart zugeordnet, dass mit steigendem Rostgrad bzw. Blasengrad bzw. Unterrostungsgrad die Bewertungsziffern von 100 auf 0 abfallen. In jedem der 3 Tests kann eine maximale Bewertungsziffer von 300 dann erreicht werden, wenn ein 100%iger Korrosionsschutz vorliegt.

Um eine quantitative Aussage über das Korrosionsschutzpigment zu erhalten, werden die drei Bewertungsziffern zu einer einzigen Kennziffer (KZ) zusammengefasst. Der Salzsprühtest gibt die Schutzwirkung bei atmosphärischen Langzeiteinflüssen am besten wieder. Deshalb wird der Salzsprühtest bei der Errechnung der Kennziffer mit dem doppelten Gewicht gewertet. Die Kennziffer wird errechnet nach der Formel:

$$KZ = \frac{2 \cdot BZ(Salzsp.) + BZ(Schwitzw.) + BZ(Kesternich.)}{1200} \cdot 100$$

Bei 100%igem Korrosionsschutz errechnet sich eine maximal mögliche Kennziffer von 100.

Die Erfindung wird durch folgende Beispiele näher erläutert:

*Beispiele 1 bis 5*

In einem mit einer Rührvorrichtung versehenen Mischbehälter wurden folgende Bestandteile zu einer Grundierung homogenisiert:

(Gewichtsteile)

Bindemittel:
Alkydharz (Alftalat® AF 342;
® = eingetragenes Warenzeichen der
Firma Hoechst Aktiengesellschaft,
Frankfurt/M                                      38,0
Lösemittel:
Äthylglykol                                       4,0
Testbenzin                                        4,0
n-Butanol                                         0,5

(Gewichtsteile)

Anstrichveredelungsmittel:
Hautverhinderungsmittel (Äthyl-methyl-
ketoxim; Additol® XL 297;
® = eingetragenes Warenzeichen der
Firma Hoechst Aktiengesellschaft,
Frankfurt/M)                                      0,5
Dimethyl-dioctadecyl-ammoniummontmorillonit (Bentone® 34, 10 gew%ig;
® = eingetragenes Warenzeichen der
Firma NL Industries Inc., New York, USA)    1,0
Pigmentstreckungsmittel (Füllstoffe):
Talkum                                            3,2
Bariumsulfat                                      4,6
Titandioxid                                       4,8
Aktivpigment (CaHPO$_4$ · 2H$_2$O +
MgHPO$_4$ · 3H$_2$O + ZnO)                        5,2

Auf der Basis dieser Rezeptur wurden durch Variation der quantitativen Zusammensetzung des Aktivpigments verschiedene Grundierungen mit einer Pigmentvolumenkonzentration von 20 eingestellt. Die Korrosionsschutzergebnisse sind in Tabelle 1 zusammengefasst.

TABELLE 1

| Beispiel | Gewichtsprozentanteile im Aktivpigment | | | Kennziffer |
|---|---|---|---|---|
| | CaHPO$_4$ · 2H$_2$O | MgHPO$_4$ · 3H$_2$O | ZnO | |
| 1 | 77,6 | 2,4 | 20,0 | 81 |
| 2 | 72,0 | 8,0 | 20,0 | 88 |
| 3 | 64,0 | 16,0 | 20,0 | 89 |
| 4 | 52,0 | 28,0 | 20,0 | 85 |
| 5 | 2,4 | 77,6 | 20,0 | 81 |

*Beispiele 6 bis 22*

Folgende Bestandteile wurden wie in den Beispielen 1 bis 5 homogenisiert:

|                                                                 | (Gewichtsteile) |
| --------------------------------------------------------------- | --------------- |
| Bindemittel:                                                    |                 |
| Alkylharz (Alftalat® AF 342;                                   |                 |
| ® = eingetragenes Warenzeichen der                             |                 |
| Firma Hoechst Aktiengesellschaft,                              |                 |
| Frankfurt/M)                                                   | 38,0            |
| Lösemittel:                                                    |                 |
| Äthylglykol                                                    | 4,0             |
| Testbenzin                                                     | 4,0             |
| n-Butanol                                                      | 0,5             |
| Anstrichveredelungsmittel:                                     |                 |
| Hautverhinderungsmittel (Äthyl-methyl-ketoxim; Additol® XL 297; |                 |
| ® = eingetragenes Warenzeichen der                             |                 |
| Firma Hoechst Aktiengesellschaft,                              |                 |
| Frankfurt/M)                                                   | 0,5             |
| Dimethyl-dioctadecyl-ammoniummontmorillonit (Bentone® 34, 10 gew.%ig; |           |
| ® = eingetragenes Warenzeichen der                             |                 |
| Firma NL Industries Inc., New York, USA)                       | 1,0             |
| Pigmentstreckungsmittel (Füllstoffe):                          |                 |
| Talkum                                                         | 10,0            |
| Bariumsulfat                                                   | 11,0            |
| Titandioxid                                                    | 13,0            |
| Aktivpigment (CaHPO$_4$ · 2H$_2$O + MgHPO$_4$ · 3H$_2$O + ZnO) | 18,0            |

Auf der Basis dieser Rezeptur wurden durch Variation der quantitativen Zusammensetzung des Aktivpigments verschiedene Grundierungen mit einer Pigmentvolumenkonzentration von 36 eingestellt. Die Korrosionsschutzergebnisse sind in Tabelle 2 zusammengefasst.

*Beispiel 23 Vergleichsbeispiel)*

Man benützte die Rezeptur für die Beispiele 6 bis 22 mit dem Unterschied, dass als Aktivpigment Zinkphosphat [Zn$_3$(PO$_4$)$_2$ · 2H$_2$O] eingesetzt wurde. Es wurde eine Pigmentvolumenkonzentration von 36 eingestellt. Das Ergebnis ist in Tabelle 2 notiert.

*Beispiel 24 (Vergleichsbeispiel)*

Man benützte die Rezeptur für die Beispiele 6 bis 22 mit dem Unterschied, dass als Aktivpigment Zinkoxid (ZnO) eingesetzt wurde. Es wurde eine Pigmentvolumenkonzentration von 36 eingestellt. Das Ergebnis ist in Tabelle 2 notiert.

*Beispiel 25 (Vergleichsbeispiel)*

Man benützte die Rezeptur für die Beispiele 6 bis 22 mit dem Unterschied, dass als Aktivpigment ein zinkoxidfreies Gemisch von CaHPO$_4$ · 2H$_2$O und MgHPO$_4$ · 3H$_2$O im Gewichtsverhältnis 60 : 40 eingesetzt wurde. Es wurde eine Pigmentvolumenkonzentration von 36 eingestellt. Das Ergebnis ist in Tabelle 2 notiert.

## TABELLE 2

| Beispiel | Gewichtsprozentanteile im Aktivpigment | | | | Kennziffer |
| --- | --- | --- | --- | --- | --- |
|  | CaHPO$_4$ · 2H$_2$O | MgHPO$_4$ · 3H$_2$O | ZnO | Zn$_3$(PO$_4$)$_2$ · 2H$_2$O |  |
| 6 | 87,3 | 2,7 | 10,0 | — | 82 |
| 7 | 81,0 | 9,0 | 10,0 | — | 90 |
| 8 | 72,0 | 18,0 | 10,0 | — | 88 |
| 9 | 58,5 | 31,5 | 10,0 | — | 85 |
| 10 | 2,7 | 87,3 | 10,0 | — | 81 |
| 11 | 77,6 | 2,4 | 20,0 | — | 82 |
| 12 | 72,0 | 8,0 | 20,0 | — | 91 |
| 13 | 64,0 | 16,0 | 20,0 | — | 92 |
| 14 | 52,0 | 28,0 | 20,0 | — | 89 |
| 15 | 2,4 | 77,6 | 20,0 | — | 81 |
| 16 | 48,5 | 1,5 | 50,0 | — | 81 |
| 17 | 45,0 | 5,0 | 50,0 | — | 89 |
| 18 | 40,0 | 10,0 | 50,0 | — | 87 |
| 19 | 32,5 | 17,5 | 50,0 | — | 90 |
| 20 | 1,5 | 48,5 | 50,0 | — | 79 |
| 21 | 88,2 | 9,8 | 2,0 | — | 81 |
| 22 | 1,6 | 0,4 | 98,0 | — | 79 |
| 23 | — | — | — | 100 | 65 |
| 24 | — | — | 100,0 | — | 72 |
| 25 | 60,0 | 40,0 | — | — | 71 |

**Patentansprüche**

1. Korrosionsinhibierendes Aktivpigment für den Oberflächenschutz von Eisen und Eisenlegierungen, dadurch gekennzeichnet, dass es aus einer Mischung von Calciumhydrogenphosphatdihydrat, Magnesiumhydrogenphosphattrihydrat und Zinkoxid besteht, wobei die Mischung 2 bis 98 Gew.-% ZnO enthält, während sich die restlichen 98 bis 2 Gew.-% Phosphatanteil ihrerseits aus 3 bis 97

Gew.-% CaHPO$_4$ · 2H$_2$O und 97 bis 3 Gew.-% MGHPO$_4$ · 3H$_2$O zusammensetzen.

2. Korrosionsinhibierendes Aktivpigment nach Anspruch 1, dadurch gekennzeichnet, dass die Mischung 10 bis 50 Gew.-% ZnO enthält, während sich die restlichen 90 bis 50 Gew.-% Phosphatanteil ihrerseits aus 65 bis 95 Gew.-% CaHPO$_4$ · 2H$_2$O und 35 bis 5 Gew.-% MgHPO$_4$ · 3H$_2$O zusammensetzen.

3. Anstrichfarbe oder Lack für den Oberflächenschutz von Eisen und Eisenlegierungen, enthaltend das korrosionsinhibierende Aktivpigment gemäss Anspruch 1 oder 2.

4. Anstrichfarbe oder Lack nach Anspruch 3, enthaltend einen Gesamtpigmentanteil, der zu 5 bis 100 Gew.-% aus dem Aktivpigment und zu 95 bis 0 Gew.-% aus einem handelsüblichen Pigmentstreckungsmittel besteht.

5. Anstrichfarbe oder Lack nach Anspruch 4, dadurch gekennzeichnet, dass das Gesamtpigment in einer Pigmentvolumenkonzentration von 10 bis 60, vorzugsweise von 20 bis 40, Vol-% enthalten ist.

## Claims

1. Corrosion-inhibiting active pigment for the protection of iron and iron alloy surfaces, characterised in that it consists of a mixture of calcium hydrogenophosphate dihydrate, magnesium hydrogenophosphate trihydrate and zinc oxide, the mixture containing 2 to 98 weight% of ZnO, the remaining 98 to 2 weight% of phosphate components consisting in turn of 3 to 97 weight% of CaHPO$_4$ · 2H$_2$O and 97 to 3 weight% of MgHPO$_4$ · 3H$_2$O.

2. Corrosion-inhibiting pigment as claimed in claim 1, characterised in that the mixture contains 10 to 50 weight% of ZnO, the remaining 90 to 50 weight% of phosphate components consisting in turn of 65 to 95 weight% of CaHPO$_4$ · 2H$_2$O and 35 to 5 weight% of MgHPO$_4$ · 3H$_2$O.

3. Painting composition or lacquer for the protection of iron and iron alloy surfaces, the composition or lacquer containing the corrosion-inhibiting active pigment as claimed in claim 1 or 2.

4. Painting composition or lacquer as claimed in claim 3, in which the total pigment proportion consists to an extend of 5 to 100 weight% of the active pigment and of 95 to 0 weight% of a commercial pigment extender.

5. Painting composition or lacquer as claimed in claim 4, containing the total pigment in a pigment volume concentration of 10 to 60 volume%, preferably 20 to 40 volume%.

## Revendications

1. Pigment actif inhibiteur de corrosion pour la protection de surfaces en fer et alliages de fer, caractérisé en ce qu'il consisté en un mélange d'hydrogénophosphate de calcium dihydraté, d'hydrogènophosphate de magnésium trihydraté et d'oxyde de zinc, le mélange contenant 2 à 98% en poids de ZnO, les 98 à 2% en poids complémentaires de phosphates restants étant à leur tour constitués par 3 à 97% en poids de CaHPO$_4$ · 2H$_2$O et 97 à 3% en poids de MgHPO$_4$ · 3H$_2$O.

2. Pigment actif inhibiteur de corrosion selon la revendication 1, caractérisé en ce que le mélange contient 10 à 50% en poids de ZnO, les 90 à 50% en poids complémentaires de phosphates restants étant à leur tour constitués par 65 à 95% en poids de CaHPO$_4$ · 2H$_2$O et 35 à 5% en poids de MgHPO$_4$ · 3H$_2$O.

3. Enduit ou vernis pour la protection de surfaces en fer et alliages de fer contenant le pigment actif inhibiteur de corrosion selon la revendication 1 ou 2.

4. Enduit ou vernis selon la revendication 3, contenant une quantité totale de pigment constituée par 5 à 100% en poids du pigment actif et par 95 à 0% en poids d'un diluant de pigment du commerce.

5. Enduit ou vernis selon la revendication 4, caractérisé en ce qu'il contient le pigment total en une concentration en volume de pigment de 10 à 60%, de préférence 20 à 40% en volume.